# FASCICULE DE BREVET EUROPEEN

(11) **EP 3 902 724 B1**
(45) Date de publication et mention de la délivrance du brevet: **27.11.2024**
(21) Numéro de dépôt: 19828676.7
(22) Date de dépôt: 17.12.2019
(51) Int. Cl.: B60S 1/56, B60S 1/48

(54) **PROCÉDÉ DE NETTOYAGE D'UNE SURFACE OPTIQUE D'UN VÉHICULE AUTOMOBILE**
VERFAHREN ZUR REINIGUNG EINER OPTISCHEN OBERFLÄCHE EINES KRAFTFAHRZEUGS
METHOD FOR CLEANING AN OPTICAL SURFACE OF A MOTOR VEHICLE

(30) Priorité: 26.12.2018 FR 1874194
(43) Date de publication de la demande: 03.11.2021
(73) Titulaire: Valeo Systèmes d'Essuyage, 78322 Le Mesnil Saint Denis (FR)
(72) Inventeur: BRETAGNOL, Frédéric, 63500 ISSOIRE (FR); PERET, Adrien, 63500 ISSOIRE (FR); BEZIAT, Baptiste, 63500 ISSOIRE (FR)
(74) Mandataire: Valeo Visibility
(86) Numéro de dépôt international: PCT/EP2019/085597
(87) Numéro de publication internationale: WO 2020/136041

(56) Documents cités:
- EP-A1- 2 817 185
- EP-A1- 2 873 572
- WO-A1-2017/202562
- WO-A1-98/58826
- DE-A1- 102014 220 257
- US-A1- 2014 270 379
- US-A1- 2016 272 164

## Description

Le domaine technique de l'invention est celui des dispositifs de nettoyage de surface optique de véhicule automobile, et plus particulièrement des dispositifs de nettoyage d'une surface d'un capteur optique équipant un tel véhicule automobile.

Les véhicules automobiles comprennent de plus en plus de systèmes automatisés, parmi lesquels on distingue notamment des systèmes d'aide à la conduite qui peuvent permettre aussi bien, dans un moindre degré d'autonomie du véhicule, d'aider ou de réaliser des manœuvres de stationnement que de réaliser, dans un degré maximum d'autonomie du véhicule, le pilotage du véhicule sans qu'un conducteur soit présent dans le véhicule. De tels systèmes d'aide à la conduite comprennent notamment un ou plusieurs dispositifs de détection munis de capteurs optiques aptes à détecter un environnement du véhicule et aptes à évaluer des paramètres externes à ce véhicule. Les capteurs optiques sont associés à au moins une unité de contrôle configurée pour interpréter les informations ainsi recueillies et pour prendre les décisions qui s'imposent en conséquence de ces informations.

Plus particulièrement, la mise en œuvre de véhicules autonomes, sans conducteur, implique l'utilisation d'une pluralité de capteurs optiques disposés tout autour du véhicule, pour que l'unité de contrôle ait une image très précise de l'environnement du véhicule, au moins aussi fiable que l'image tridimensionnelle qu'un conducteur pourrait obtenir par lui-même.

Par exemple, un capteur optique peut être placé au niveau de l'arrière du véhicule afin de permettre au conducteur d'avoir une vision plus aisée des obstacles se situant derrière le véhicule lorsqu'il exécute une manœuvre de stationnement. Les capteurs optiques sont ainsi généralement placés à l'extérieur du véhicule, exposés aux intempéries, poussières et/ou débris tels que, par exemple, des projections de boue ou des insectes venant s'écraser sur la surface optique du capteur, notamment sous l'effet de la vitesse du véhicule. Au cours du temps, le champ de détection d'un tel capteur peut donc se trouver totalement ou partiellement obstrué par de telles salissures, et il s'avère alors nécessaire de nettoyer régulièrement la surface optique du capteur pour lui permettre de remplir sa fonction.

Un tel nettoyage peut être réalisé à l'aide d'un liquide de nettoyage projeté sous pression sur la surface optique considérée. En fonction de la nature de la salissure, une quantité plus ou moins importante de liquide de nettoyage devra être utilisée pour un résultat incertain. En effet, certains types de salissures comme, par exemple, la boue ou des résidus d'insectes, peuvent ne pas être retirés complètement après une projection de fluide et nécessiter une intervention du conducteur pour retirer manuellement les éléments les plus adhérents. L'augmentation de la pression peut être efficace mais en nécessitant une quantité de fluide importante. Il est également possible d'utiliser un fluide de nettoyage spécifique, apte à permettre plus efficacement la dissolution de résidus d'insecte par exemple, mais il est entendu que l'usage de ces liquides spécifiques est coûteux et peut nécessiter une architecture spécifique avec plusieurs réservoirs de stockage notamment.

Par ailleurs, pour augmenter l'efficacité d'un tel nettoyage, il est possible d'effectuer un chauffage du liquide de nettoyage préalablement à sa projection sur la surface du capteur. Si une telle solution peut s'avérer efficace par exemple en hiver, c'est-à-dire lorsque la température extérieure est basse, pour des traces résistantes telles que des traces de boue, son efficacité reste discutable, par exemple en été, c'est-à-dire lorsque la température extérieure est élevée, pour le retrait de salissures telles que des insectes.

D'autres procédés de nettoyage d'une surface optique d'un véhicule automobile sont décrits notamment dans les documents WO9858826 et US2014270379.

La présente invention a pour but de proposer une solution de nettoyage simple, peu coûteuse, et efficace dans toutes les situations de nettoyage d'une surface optique d'un capteur tel que précédemment défini, quel que soit le type et la quantité de salissure présente sur cette surface.

Dans ce but, la présente invention a pour objet un procédé de nettoyage automatisé d'une surface optique d'un véhicule automobile, comprenant au moins un cycle de nettoyage de la surface optique comportant plusieurs étapes distinctes et successives de projection de fluide, ledit cycle de nettoyage comprenant au moins une première étape de projection de fluide de nettoyage sur la surface optique, une deuxième étape de projection de fluide de nettoyage sur la surface optique, et une étape de pause, d'une durée non nulle, entre la première étape de projection de fluide de nettoyage et la deuxième étape de projection de fluide de nettoyage.

Préférentiellement, mais non exclusivement, l'invention s'applique au nettoyage automatisé d'une surface optique d'un capteur optique utile à la mise en œuvre d'un système d'assistance à la conduite : à titre d'exemples non limitatifs, un tel capteur peut être une caméra de prises de vues (dans ce cas, le capteur pourra, par exemple, être une lentille d'une telle caméra), ou tout autre capteur conçu pour détecter une information de nature optique et la transmettre à une unité de pilotage du véhicule. On entend donc ici par surface optique une surface d'un tel capteur active pour la détection : il peut s'agir, par exemple, de la surface vitrée d'une lentille ou bien de la surface transparente aux rayonnements électromagnétiques d'un dispositif de type LIDAR par exemple. Dans ce qui suit, la surface optique sera également désignée comme surface optique du capteur considéré. Par procédé de nettoyage automatisé, on comprend un procédé dont les paramètres sont définis par une unité de contrôle en fonction de données récupérées par cette même unité de contrôle. On se distingue d'une opération manuelle de nettoyage lors de laquelle c'est le conducteur qui décide selon son ressenti d'une séquence de nettoyage et de projection de fluide.

Selon une caractéristique de l'invention, il est notable que le procédé met en œuvre successivement deux étapes de projection distinctes en ce sens qu'elles se produisent de façon différée dans le temps, et que le procédé prévoit par ailleurs un temps de pause conséquent empêchant d'enchaîner la deuxième étape de projection immédiatement après la première étape de projection. Le temps de pause, d'une durée non nulle, interrompt la projection de fluide pour laisser le temps au fluide projeté dans un premier temps, d'agir sur les salissures et de modifier leur structure, notamment en les humidifiant sur une durée conséquente.

Selon l'invention, le procédé de nettoyage comporte une étape de détection d'un niveau de salissure de la surface optique, la durée de la première étape de projection, de l'étape de pause et de la deuxième étape de projection pouvant varier en fonction du niveau de salissure détecté. Notamment, on pourra prévoir que la durée de l'étape de pause soit modifiée pour favoriser l'imprégnation du fluide projeté lors de la première étape de projection.

Dans ce contexte, la détection d'un niveau de salissure de la surface optique peut être réalisée par comparaison d'une information détectée par le capteur avec une information de référence, par exemple stockée dans une unité de contrôle d'un système de nettoyage du capteur. Une telle information peut, par exemple, dans le cas où le capteur considéré est un capteur optique, être une image prise par ce capteur.

Selon un autre exemple, la détection d'un niveau de salissure de la surface optique du capteur peut être réalisée par comparaison de deux informations successivement détectées par le capteur à un intervalle de temps préalablement défini, une telle comparaison étant, par exemple, réalisée dans une unité de contrôle telle que précédemment évoquée. Dans le cas où le capteur considéré est un capteur optique, il peut s'agir, par exemple, de la comparaison de deux images successives prises à un intervalle de temps préalablement défini.

Avantageusement, le cycle de nettoyage de la surface optique du capteur est déclenché dès lors que le niveau de salissure constaté est supérieur à un seuil préalablement défini. Il faut donc comprendre ici qu'un système de nettoyage mettant en œuvre un procédé selon l'invention comprend au moins une unité de contrôle dans laquelle sont stockées les informations détectées par le capteur, ainsi que des moyens de comparaison des informations stockées entre elles et/ou avec une ou plusieurs informations de référence préalablement définies. Selon un exemple, de tels moyens de comparaison peuvent comprendre des moyens de traitement d'une image afin d'en déterminer la netteté et la précision. Ainsi, le cycle de nettoyage précédemment défini peut être déclenché dès lors qu'une netteté et/ou une précision d'une telle image est inférieure à une netteté et/ou à une précision préalablement définies.

Selon un autre exemple, le cycle de nettoyage précité peut être déclenché dès lors qu'une anomalie est constatée dans l'information détectée. Plus précisément, dans le cas où le capteur considéré est un capteur optique, le cycle de nettoyage précité peut être déclenché dès lors, par exemple, que la présence d'une zone non détectée est constatée. On pense ici au cas où une tâche dont la taille dépasse un seuil préalablement défini serait détectée sur une prise de vue réalisée au moyen d'un capteur optique, tâche résultant, par exemple, de la présence d'un insecte écrasé. Dans un tel cas, un niveau global de salissure de la surface du capteur considéré peut rester inférieur à un seuil préalablement défini, l'image présentant toutefois une région obscure dont la présence nuit à la qualité de la détection réalisée.

Tel que cela a été précisé, selon l'invention, le cycle de nettoyage comprend successivement une première étape de projection d'un fluide de nettoyage sur la surface optique du capteur considéré, une étape de pause d'une durée non nulle, suivie d'une deuxième étape de projection d'un fluide de nettoyage sur la surface optique du capteur considéré.

Le fluide de nettoyage est ici préférentiellement un liquide ou un mélange de liquides choisis par exemple pour leurs propriétés détergentes. Selon un exemple, le fluide de nettoyage projeté lors de la première étape de projection et le fluide de nettoyage projeté lors de la deuxième étape de projection sont identiques. Selon un autre exemple, le fluide de nettoyage projeté lors de la première étape de projection présente, par exemple, des propriétés tensioactives différentes de celles du fluide de nettoyage projeté lors de la deuxième étape de projection, de telle manière que l'action chimique du fluide de nettoyage projeté lors de la première étape de projection est supérieure à celle du fluide de nettoyage projeté lors de la deuxième étape de projection.

Quelle que soit la nature du ou des fluides de nettoyage projetés lors des deux étapes de projection précitées, l'invention prévoit qu'un temps de pause d'une durée non nulle sépare ces deux étapes de projection. Avantageusement, ce temps de pause présente une durée minimale de l'ordre de deux secondes. Préférentiellement, la durée de ce temps de pause est de l'ordre de cinq secondes.

Tel que précédemment décrit, l'étape de pause permet une imprégnation prolongée de la surface optique du capteur par le fluide de nettoyage projeté lors de la première étape de projection est réalisée, permettant ainsi, par exemple, une première dissolution des salissures présentes sur la surface optique.

Lors de la deuxième étape de projection de fluide de nettoyage, les salissures dissoutes lors de l'étape de pause sont évacuées par le fluide de nettoyage, améliorant ainsi l'efficacité de l'opération de nettoyage. L'invention permet ainsi, par des moyens simples, de retirer de la surface optique du capteur des salissures adhérentes dont le retrait nécessiterait, sans la mise en œuvre du procédé selon l'invention, une intervention mécanique manuelle.

Il est à noter que l'invention s'étend à un procédé comprenant une pluralité de cycles de projection et le cas échéant d'étapes de détection d'un niveau de salissure de la surface optique du capteur. Plus précisément, l'invention s'étend à un procédé dans lequel une première étape de détection d'un niveau de salissure est réalisée et génère la mise en œuvre des deux étapes de projection séparées par le temps de pause, dans lequel une nouvelle étape de détection d'un niveau de salissure est réalisée à la suite des étapes de projection, et dans lequel, à l'issue de cette deuxième étape de détection d'un niveau de salissure, une nouvelle séquence d'une première étape de projection de fluide de nettoyage, d'une étape de pause et d'une deuxième étape de projection de fluide de nettoyage est réalisée.

L'invention peut également présenter une ou plusieurs des caractéristiques suivantes, prises séparément ou en combinaison :
une durée de l'étape de pause est supérieure à une durée de la première étape de projection de liquide de nettoyage. Ceci permet d'augmenter l'efficacité de l'imprégnation précédemment évoquée, pour un nettoyage optimal avec une quantité de fluide contrôlée plus efficacement.
une durée de la première étape de projection de fluide de nettoyage est inférieure ou égale à une durée de la deuxième étape de projection de fluide de nettoyage. Selon un exemple, une durée de la première étape de projection de liquide de nettoyage est sensiblement de l'ordre de la seconde.
une pression du fluide de nettoyage projeté sur la surface du capteur lors de la première étape de projection est inférieure ou égale à une deuxième pression du fluide de nettoyage projeté sur la surface du capteur lors de la deuxième étape de projection. La fonction de la première étape de projection n'est pas de retirer les salissures sous l'effet de la pression de projection, mais d'imprégner les salissures de fluide pour faciliter l'effet de décapage lors de la deuxième étape de projection. Il n'est dès lors pas nécessaire de prévoir une forte pression de projection de fluide dans cette première étape, et cela s'inscrit dans un contexte d'économie du fluide projeté, ce qui peut être d'autant plus intéressant si le fluide utilisé dans cette première étape de projection est un fluide aux propriétés chimiques spécifiques.
une pression du fluide de nettoyage projeté lors de la première étape de projection est inférieure ou égale à 3 bars.
une étape de chauffage du ou des fluides de nettoyage projetés sur la surface optique du capteur est réalisée au mois préalablement au déclenchement du cycle de nettoyage. Une synergie est notable entre le chauffage du fluide projeté et le temps de pause laissé entre les deux étapes de projection de fluide. Ainsi, l'efficacité d'imprégnation du fluide projeté et son rôle de dissolution des salissures sur la surface optique est meilleure lorsque le fluide est chauffé.
l'étape de chauffage est réalisée de telle sorte que la température du fluide projeté dans la première étape de projection est supérieure ou égale à la température du fluide projeté dans la deuxième étape de projection. Il convient de noter que l'effet du chauffage du fluide projeté est essentiellement souhaitable lors de la période couvrant la première étape de projection et le temps de pause, et donc pour la température du fluide projeté lors de la première étape de projection, de sorte qu'on pourrait prévoir une coupure du chauffage en même temps que l'interruption de la première étape de projection sans que cela soit préjudiciable pour l'invention.
l'étape de chauffage est réalisée de manière continue dès l'allumage du véhicule, la température du fluide de nettoyage étant maintenue à une température sensiblement constante.

Selon un exemple avantageux, une température du fluide de nettoyage projeté lors de la première étape de projection est supérieure à 20°C, et par exemple supérieure à 30°C. Le chauffage du fluide de nettoyage projeté sur la surface optique du capteur permet d'augmenter à la fois l'efficacité chimique de ce fluide de nettoyage sur les salissures à retirer, ainsi que son efficacité à dissoudre ces salissures.
le procédé selon l'invention comprend une étape d'analyse de besoin de nettoyage de la surface optique, comprenant au moins une étape de détection d'une vitesse de déplacement du véhicule, et/ou une étape de détection d'une température extérieure. En effet, la présence de salissures sur une surface optique du capteur considéré peut être augmentée lorsque le véhicule se déplace à vitesse élevée. L'invention peut alors prévoir, par exemple, que l'intervalle de temps qui sépare la détection de deux informations successives en vue de la définition d'un niveau de salissure est réduit lorsque la vitesse de déplacement du véhicule est augmentée. De façon analogue, la présence de salissures sur une surface optique du capteur considéré peut être augmentée lorsque le véhicule se déplace en été. L'invention peut alors prévoir, par exemple, que l'intervalle de temps qui sépare la détection de deux informations successives en vue de la définition d'un niveau de salissure est réduit lorsque la température extérieure est au-delà d'un certain seuil.

L'invention s'étend également à un système de nettoyage d'une surface optique d'un capteur d'un véhicule automobile, comprenant au moins :
- un dispositif de projection d'un fluide de nettoyage, configuré pour réaliser, à des intervalles de temps non nuls, différentes étapes de projection du fluide de nettoyage,
- une unité de contrôle configurée pour générer des instructions de pilotage du dispositif de projection et commander au moins une étape du procédé de nettoyage tel que précédemment décrit.

Le système de nettoyage peut comporter en outre un module de chauffage d'un fluide de nettoyage, configuré pour porter un fluide de nettoyage à au moins une température prédéfinie, un capteur de température extérieure et/ou un capteur de vitesse du véhicule, une unité de traitement configurée pour déterminer un niveau de salissure de la surface optique, ladite unité de contrôle étant configurée pour générer lesdites instructions de pilotage en fonction de données reçues en provenance d'un capteur ou de l'unité de traitement.

D'autres caractéristiques et avantages de la présente invention apparaitront plus clairement à l'aide de la description et des dessins parmi lesquels :
la [Figure 1] est une représentation schématique d'un véhicule automobile équipé de moyens pour la mise en œuvre d'un procédé de nettoyage selon l'invention ;
la [Figure 2] est une vue de détail de ces moyens, représentant schématiquement une unité de contrôle apte à recevoir des informations de capteurs de température, de vitesse et de niveau de salissure d'un capteur et apte à générer en conséquence des instructions de pilotage d'une pompe et d'une vanne pilotée pour contrôler notamment la durée de phases de projection de fluide ;
la [Figure 3] est une représentation schématique des différentes étapes d'un procédé selon l'invention, et
la [Figure 4] est un tableau récapitulatif de tests du procédé de nettoyage avec différents paramètres, notamment de durée, des étapes du procédé.

Il faut tout d'abord noter que si les figures exposent l'invention de manière détaillée pour sa mise en œuvre, lesdites figures peuvent bien entendu servir à mieux définir l'invention le cas échéant. Toutefois, il est à noter que ces figures n'exposent qu'une partie des exemples de réalisation possibles selon l'invention.

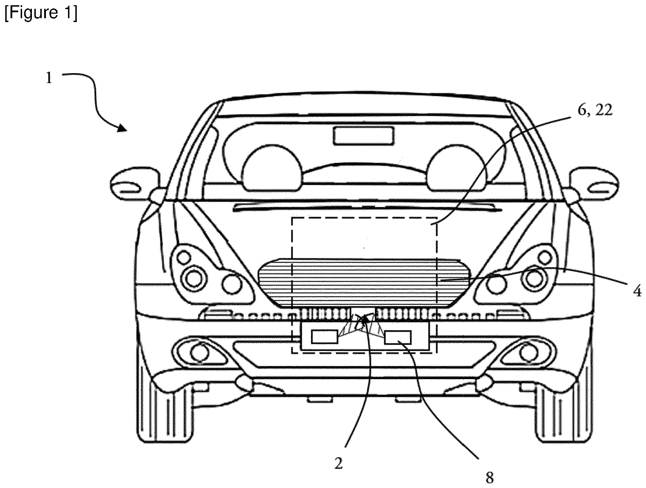

Un véhicule 1, illustré sur la [Figure1], comporte un système d'assistance à la conduite, comportant au moins un capteur optique 2, ici une caméra de vision, qui pourrait sans sortir du contexte de l'invention consister en un dispositif de détection de type LIDAR ou RADAR.

Le capteur optique 2 est ici disposé en face avant du véhicule, au niveau de la calandre 4, mais on comprendra qu'il peut être situé à l'arrière du véhicule, sur les côtés du véhicule, ou encore au niveau du toit, sans là encore que cela sorte du contexte de l'invention.

Le capteur optique 2 est associé à un système de nettoyage 6 apte à retirer les salissures d'une surface vitrée du capteur optique et qui comporte au moins un dispositif de projection de fluide.

Plus particulièrement, le système de nettoyage 6 comporte au moins un réservoir 10 de fluide de nettoyage et au moins un dispositif de projection 8, sous forme d'un gicleur par exemple, par lequel ou lesquels le fluide de nettoyage est susceptible d'être projeté en direction de la surface vitrée du capteur optique. Le système de nettoyage comporte par ailleurs au moins un conduit de distribution 12 reliant le(s) réservoir(s) au(x) gicleur(s) et des moyens de pilotage de l'alimentation en fluide de nettoyage comportant notamment au moins une pompe 14 et une vanne pilotée 16.

Il convient de comprendre que la pompe 14 est disposée en sortie du réservoir 10 de fluide pour porter le fluide envoyé en direction du dispositif de projection à une pression déterminée, et que la vanne pilotée 16 est disposée en amont du dispositif de projection 8 pour autoriser ou interdire le passage de fluide en direction du gicleur.

Le système de nettoyage 6 comporte par ailleurs une unité de contrôle 18 qui est configurée pour piloter le système de nettoyage 6 selon une séquence appropriée, cette séquence pouvant être mise en œuvre ou modifiée le cas échéant en fonction des conditions environnementales, ou bien d'une détection d'un niveau de salissures du capteur optique.

Le système de nettoyage 6 comprenant au moins un dispositif de projection 8 pour la projection de fluide nettoyant sur la surface optique peut le cas échéant, dans une variante ici non représentée, comprendre un dispositif de nettoyage additionnel, par exemple une lame racleuse susceptible de venir nettoyer la surface optique après projection du fluide de nettoyage.

Le réservoir de fluide de nettoyage comporte un module de chauffage 20 du fluide, susceptible d'être mis en œuvre lors de l'allumage du véhicule et dimensionné pour donner au fluide une première température de fonctionnement, par exemple 20°. De manière alternative, le module de chauffage 20 peut être configuré pour donner plusieurs températures différentes au fluide de nettoyage, parmi lesquelles une première température par exemple égale à 20° et une deuxième température par exemple égale à 40°.

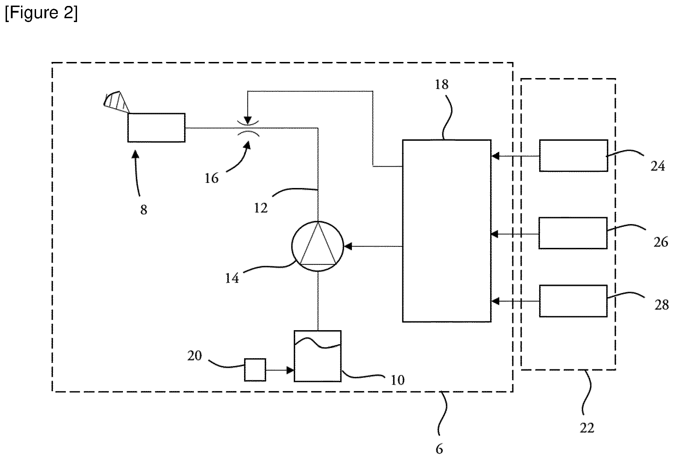

Le véhicule comporte par ailleurs un système d'analyse du besoin de nettoyage 22 du capteur, qui comporte différents capteurs ou unités de traitement de données configurés respectivement pour envoyer une information à l'unité de contrôle 18 du système de nettoyage, ladite information étant obtenue par le traitement de données de température extérieure et/ou de vitesse du véhicule pour la détection de conditions de roulage propice à l'apparition d'une salissure devant être nettoyé selon le procédé de nettoyage de l'invention, ou bien sur la base de traitement des images acquises par le capteur optique pour l'analyse d'un niveau de salissures présentes sur la surface optique. Dans l'exemple illustré sur la [Figure 2], les capteurs ou unités de traitement du système d'analyse 22 communiquent directement avec l'unité de contrôle mais il est bien entendu possible qu'un module de traitement puisse faire la synthèse des données au sein du système d'analyse 22 pour envoyer une information unique à l'unité de contrôle du système de nettoyage 6.

Ce système d'analyse du besoin de nettoyage 22 peut ainsi comporter un capteur de température extérieure 24, visant notamment à détecter si le véhicule roule pendant une période estivale, par comparaison de la température extérieure mesurée avec une valeur de température seuil, égale par exemple à 20°.

De manière alternative ou cumulative, ce système d'analyse du besoin de nettoyage 22 peut comporter également un capteur de vitesse 26 du véhicule, notamment destiné à envoyer une information selon laquelle le véhicule roule à grande vitesse, par exemple sur autoroute, par comparaison de la vitesse mesurée avec une valeur de vitesse seuil, égale par exemple à 100km/h.

Sans sortir du contexte de l'invention, on pourra prévoir que l'information relative à la température et/ou l'information relative à la vitesse sont obtenues respectivement par un capteur spécifique au système d'analyse du besoin de nettoyage, ou bien obtenu via un système de contrôle global du véhicule qui détient déjà ces informations pour d'autres applications.

Le système d'analyse du besoin de nettoyage 22 peut comporter également, de manière alternative ou cumulative, des moyens d'analyse et de traitement d'image 28, configuré pour récupérer l'image acquise par le capteur à l'instant T et pour comparer cette image avec l'image acquise à l'instant précédent T-ΔT. L'analyse comparative de ces deux images, pixel par pixel, permet de détecter un niveau de salissure sur la surface optique, en scrutant l'apparition d'une zone sombre sur l'image acquise, cette zone sombre étant révélatrice d'une salissure, que ce soit par exemple une trace de boue ou un moustique écrasé.

Tel que cela se comprend de ce qui précède, l'unité de contrôle 18 du système de nettoyage 6 du capteur est configurée pour réaliser un pilotage du procédé de nettoyage, notamment par la mise en place d'une séquence appropriée de fonctionnement des gicleurs, et le cas échéant pour conditionner ce procédé de nettoyage en fonction des informations récupérées par le système d'analyse du besoin de nettoyage.

Le procédé de nettoyage mis en œuvre par l'unité de contrôle 18 est notamment spécifique en ce qu'une première étape de projection de fluide 30 est commandée, pendant une durée déterminée, avec un fluide à une température et une pression données, et en ce qu'une deuxième étape de projection distincte 32 est mise en œuvre ultérieurement, avec un fluide projeté à une température et une pression données, la deuxième étape de projection 32 étant mise en œuvre après un temps de pause 34 suffisamment conséquent pour que le fluide projeté lors de la première étape de projection 30 ait une action d'imprégnation des salissures présentes sur la surface optique du capteur.

Dans le procédé selon l'invention, le liquide projeté dans la première étape de projection 30 a ainsi pour fonction d'humidifier la surface optique du capteur sans forcément la débarrasser des salissures, tandis que le temps de pause 34, commençant au moment de l'interruption de la première étape de projection 30, a pour fonction de laisser le fluide, projeté au préalable lors de la première étape 30, s'imprégner sur la surface optique et modifier la structure des salissures présentes, et la deuxième étape de projection 32 a pour fonction de nettoyer la surface vitrée, en retirant les salissures.

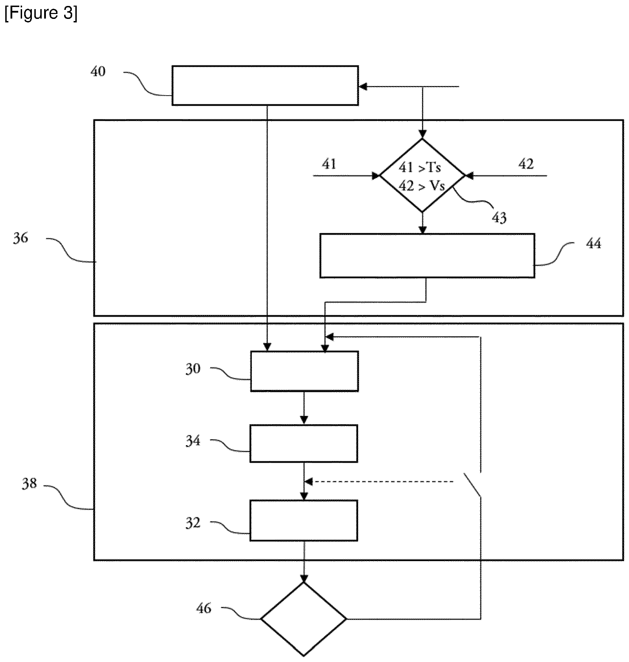

Un exemple de procédé de nettoyage est plus particulièrement décrit en référence à la [Figure 3], étant entendu qu'au cours de cet exemple de procédé, l'unité de contrôle 18 met successivement en œuvre une étape d'analyse du besoin de nettoyage 36 et un cycle de nettoyage 38 proprement dite, suite à une étape de chauffage 40 initial du fluide de nettoyage. Tel que cela a été évoqué précédemment, le procédé de nettoyage selon l'invention comprend au moins ledit cycle de nettoyage 38.

Lors du démarrage du véhicule, une étape de chauffage 40 du fluide de nettoyage est mise en œuvre de manière à porter le fluide de nettoyage à une température égale à une valeur déterminée, par exemple 20°C. Le chauffage du fluide est piloté de manière à ce que le fluide de nettoyage soit porté à cette température et qu'il soit maintenu à cette température pendant toute la durée du procédé de nettoyage.

Simultanément, dans une étape d'analyse du besoin de nettoyage 36, dès le démarrage du véhicule, deux informations sont récupérées, ici via un capteur approprié à chacune des mesures, à savoir une première information 41 de température extérieure T et une deuxième information 42 de vitesse V du véhicule. Chacune de ces informations est comparée, lors d'une première sous étape d'analyse 43, par rapport respectivement à une valeur seuil de température Ts et à une valeur seuil de vitesse du véhicule Vs.

Dans l'exemple illustré, cette première sous étape d'analyse 43 indique en sortie un besoin de nettoyage lorsque d'une part la température extérieure est supérieure à la valeur seuil de température Ts, par exemple 20°C, qui reflète une situation estivale lors de laquelle le risque de voir des insectes écrasés sur la surface optique du capteur est accru, et lorsque d'autre part la vitesse du véhicule est supérieure à la valeur seuil de vitesse Vs, par exemple 100km/h, qui reflète une situation de roulage à grande vitesse sur autoroute lors de laquelle le risque de voir des insectes écrasés sur la surface optique est là encore accru.

Une deuxième sous étape d'analyse 44 consiste en une analyse du niveau de salissures de la surface optique du capteur notamment par la mise en œuvre des moyens de traitement d'images prévus et évoqués précédemment. Le résultat peut soit être comparé à une valeur seuil pour définir si un cycle de nettoyage est nécessaire, ce qui peut par exemple être le cas si le taux de salissures est supérieur à 20%, soit être pris en compte pour modifier l'un des paramètres du cycle de nettoyage à suivre, et notamment la durée du temps de pause.

Le cycle de nettoyage 38 comporte, tel que précisé précédemment, une première étape de projection 30 de fluide de nettoyage. La vanne pilotée 16 est activée pendant une durée déterminée, de l'ordre d'une ou plusieurs secondes, pour laisser passage au fluide de nettoyage vers le dispositif de projection 8.

Au terme de cette durée déterminée, l'unité de contrôle 18 stoppe l'alimentation du dispositif de projection 8 en fluide de nettoyage, de manière à interrompre la première étape de projection 30. Un temps de pause 34 dans la projection est réalisé, pendant une durée déterminée supérieure à deux secondes selon l'invention.

A la fin de ce temps de pause 34, lors duquel le fluide projeté au préalable lors de la première étape de projection 30 se répand sur la surface optique et imprègne les salissures présentes sur la surface, l'unité de contrôle 18 génère des instructions de commande de la pompe 14 et de la vanne pilotée 16 pour réaliser la deuxième étape de projection 32. Là encore, la vanne pilotée 16 est activée pendant une durée déterminée, de l'ordre d'une ou plusieurs secondes, pour laisser passage au fluide de nettoyage vers le dispositif de projection 8.

Après cette deuxième étape de projection 32, il peut être réalisé une opération de contrôle 46 lors de laquelle le niveau de salissures est contrôlé. En fonction de la réponse au test mis en œuvre lors de cette opération de contrôle 46, l'unité de contrôle 18 peut décider que le cycle de nettoyage 38 doit reprendre. Selon le taux de salissures détecté, le cycle de nettoyage 38 peut être réinitiée au niveau de la première étape de projection 30 ou au niveau de la deuxième étape de projection 32 (traits en pointillés sur la [Figure 3]).

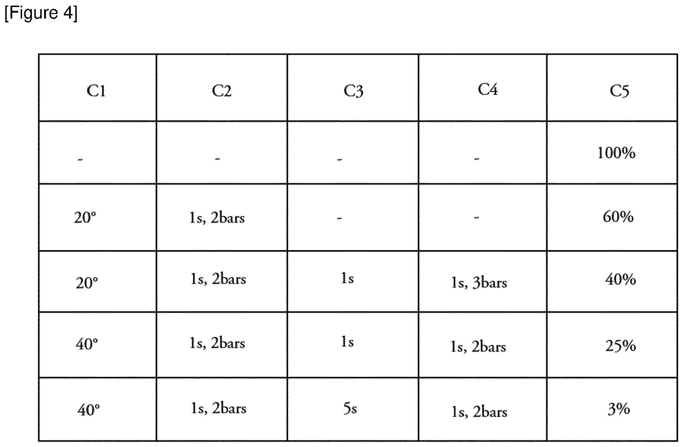

La [Figure 4] illustre le résultat des recherches effectuées par les inventeurs pour la sélection des caractéristiques essentielles du procédé selon l'invention, le tableau se lisant de la façon suivante.

Une première colonne C1 indique la température du liquide de nettoyage projeté sur la surface vitrée.

Une deuxième colonne C2 indique les caractéristiques de projection du liquide nettoyage lors de la première étape de projection 30, à savoir la durée de projection et la pression du liquide projeté.

Une troisième colonne C3 indique les caractéristiques de l'étape de pause 34, lors de laquelle aucune projection de fluide est réalisée, dans une durée déterminée pour laisser agir sur la surface vitrée le fluide de nettoyage projeté lors de la première étape de projection 30.

L'étape de de pause 34 est significative dans le contexte de l'invention en ce sens qu'elle dure au moins deux secondes (2s). Cette durée de deux secondes a ainsi été établie par les travaux des inventeurs comme une durée minimale pour que le fluide projeté dans la première étape de projection 30 ait un effet sur la salissure présente sur la surface vitrée.

La quatrième colonne C4 indique les caractéristiques de projection du liquide nettoyage lors de la deuxième étape de projection 32, à savoir la durée de projection et la pression du liquide projeter.

Dans cet exemple de réalisation, le fluide projeté lors de la deuxième étape de projection 32 est le même que le fluide projeté lors de la première étape. Il convient toutefois de noter que les fluides projetés pourraient différer d'une étape de projection à l'autre. Notamment, un premier fluide projeté lors de la première étape pourrait consister en un fluide spécifique, par exemple un fluide anti moustique, alors que le deuxième fluide projeté lors de la deuxième étape, utilisé pour décaper la surface après imprégnation du premier liquide, pourrait être uniquement de l'eau.

Le tableau de la [Figure 4] rend compte de différents tests réalisés par les inventeurs, avec des combinaisons de caractéristiques différentes dans chacune des étapes, et montre pour chacun de ces tests le résultat du procédé de nettoyage dans la cinquième colonne C5, en référence à une situation de salissement initiale de la surface optique de l'ordre de 100%.

Dans un premier test réalisé par les inventeurs, servant de test de référence, un fluide de nettoyage, chauffé à une température de 20°C, a été utilisé pendant une unique étape de projection, pendant une durée d'une seconde, avec le fluide de nettoyage mis à une pression de 2 bars. Il en résulte un niveau de nettoyage passable, avec une surface optique qui reste salie à 60%.

Dans un deuxième test réalisé par les inventeurs, mettant en œuvre le procédé de nettoyage selon l'invention, un même fluide de nettoyage a été utilisé pendant toute la durée du procédé à une température de 20°C. La première étape de projection 30 a été réalisée pendant une durée d'une seconde, avec un premier fluide de nettoyage à une pression de 2 bars. Le temps de pause 34 a été observé pendant une seconde, avant la deuxième étape de projection 32 qui a été réalisée pendant une durée d'une seconde, avec le fluide de nettoyage cette fois à une pression de 3 bars. Il en résulte une diminution du niveau de salissures, telle que la surface optique est salie à 40%. On comprend ainsi l'efficacité de la mise en place d'une étape de pause et d'une deuxième étape de projection successives, à la suite d'une interruption d'une première étape de projection.

Un troisième test permet de mettre en avant l'intérêt du chauffage du fluide de nettoyage, en proposant une séquence similaire à celle réalisée dans le deuxième test avec le fluide de nettoyage porté à une deuxième température de 40°C, et avec une pression du fluide de nettoyage lors de la deuxième étape de projection qui est diminuée à 2 bars. Il en résulte une diminution du niveau de salissures, telle que la surface optique est salie à 25%.

Un quatrième test montre une amélioration des résultats encore plus importante en privilégiant cette fois la durée du temps de pause. La température du fluide de nettoyage a là encore été de 40°C, la première étape de projection a été là encore réalisée pendant une durée d'une seconde, avec un premier fluide de nettoyage à une pression de 2 bars. Le temps de pause a été observé cette fois pendant une durée de cinq secondes, avant la deuxième étape de projection qui a été réalisée pendant une durée d'une seconde, avec le fluide de nettoyage cette fois à une pression de 2 bars. Il en résulte une forte diminution du niveau de salissures, telle que la surface optique est quasiment propre, avec un taux de salissure d'environ 3%.

Les travaux réalisés par les inventeurs ont ainsi permis de mettre en valeur le fait que la durée du temps de pause est particulièrement importante, pour laisser agir le fluide projeté lors de la première étape. Le temps de pause optimal est ici égal à cinq secondes, mais il a été constaté par ailleurs, via d'autres tests ici non représentés, qu'un temps de pause d'une durée au moins égale à deux secondes produit des effets intéressants.

Ce temps de pause, de l'ordre de quelques secondes, peut notamment être plus long que la durée de projection de fluide au cours de la première étape et/ou au cours de la deuxième étape.

La présente invention propose ainsi un procédé simple et peu coûteux à mettre en œuvre permettant d'augmenter la qualité du nettoyage des surfaces optiques des capteurs, dans des systèmes de détection de véhicules automobiles. Notamment, le procédé est simple à mettre en œuvre en ce qu'il consiste principalement à la mise en œuvre d'un temps de pause conséquent en interrompant une première étape de projection de fluide puis en reprenant après la pause par une deuxième étape de projection de fluide qui peut présenter des caractéristiques de projection différentes. Le procédé est également peu coûteux en ce qu'il permet de contrôler la quantité de fluide projeté pour arriver à une qualité de nettoyage optimale. Il n'est en effet plus nécessaire de projeter du fluide en abondance pour finir par arriver à décaper la surface et la débarrasser à l'usure de ses salissures, la présente invention visant au contraire à projeter une quantité contrôlée de fluide dans une première étape puis de la laisser agir sur les salissures dans une étape de pause lors de laquelle la projection de fluide est stoppée.

La présente invention ne saurait toutefois se limiter aux moyens et configurations décrits et illustrés ici et elle s'étend également à tout moyen et configuration équivalents et à toute combinaison techniquement opérante de tels moyens. En particulier, les moyens décrits ici pour décider de la mise en œuvre ou non des étapes de nettoyage et de l'étape de pause intermédiaire pourraient être modifiés sans nuire à l'invention dans la mesure où le procédé de nettoyage conserve cette alternance de phases de projection et de pause telle que précédemment décrite.

## Revendications

1. Procédé de nettoyage automatisé d'une surface optique d'un véhicule automobile, comprenant au moins un cycle de nettoyage (38) de la surface optique comportant plusieurs étapes distinctes et successives de projection de fluide, ledit cycle de nettoyage (38) comprenant au moins une première étape de projection (30) de fluide de nettoyage sur la surface optique, une deuxième étape de projection (32) de fluide de nettoyage sur la surface optique, ainsi qu'une étape de pause (34), d'une durée non nulle, entre la première étape de projection (30) de fluide de nettoyage et la deuxième étape de projection (32) de fluide de nettoyage, procédé au cours duquel une pression du fluide de nettoyage projeté sur la surface optique lors de la première étape de projection (30) est inférieure ou égale à une deuxième pression du fluide de nettoyage projeté sur la surface optique lors de la deuxième étape de projection (32), **caractérisé en ce que** le procédé de nettoyage comporte une étape de détection d'un niveau de salissure de la surface optique, la durée de la première étape de projection, de l'étape de pause et de la deuxième étape de projection variant en fonction du niveau de salissure détecté.

2. Procédé selon la revendication précédente, au cours duquel une durée de l'étape de pause (34) est au moins égale à deux secondes.

3. Procédé selon l'une quelconque des revendications précédentes, au cours duquel une durée de l'étape de pause (34) est supérieure à une durée de la première étape de projection (30) de fluide de nettoyage.

4. Procédé selon l'une quelconque des revendications précédentes, au cours duquel une durée de la première étape de projection (30) de fluide de nettoyage est inférieure ou égale à une durée de la deuxième étape de projection (32) de fluide de nettoyage.

5. Procédé selon la revendication précédente, au cours duquel une pression du fluide de nettoyage projeté lors de la première étape de projection (30) est inférieure ou égale à 3 bars.

6. Procédé selon l'une quelconque des revendications précédentes, au cours duquel une étape de chauffage de fluide (40) est réalisée au moins préalablement au déclenchement du cycle de nettoyage (38).

7. Procédé selon la revendication précédente, au cours duquel l'étape de chauffage (40) est réalisée de telle sorte que la température du fluide projeté dans la première étape de projection est supérieure ou égale à la température du fluide projeté dans la deuxième étape de projection.

8. Procédé selon l'une quelconque des revendications précédentes, comprenant une étape d'analyse de besoin de nettoyage (22) de la surface optique, comprenant au moins une étape de détection d'une vitesse de déplacement du véhicule, et/ou une étape de détection d'une température extérieure et/ou étape de détection d'un niveau de salissure de la surface optique.

9. Système de nettoyage (6) d'une surface d'un capteur d'un véhicule automobile, comprenant au moins :
- un dispositif de projection (8) d'un fluide de nettoyage, configuré pour réaliser, à des intervalles de temps non nuls, différentes étapes de projection du fluide de nettoyage,
- une unité de contrôle (18) configurée pour générer des instructions de pilotage du dispositif de projection et commander au moins une étape du procédé de nettoyage selon l'une quelconque des revendications précédentes.

10. Système de nettoyage (6) selon la revendication précédente, **caractérisé en ce qu'**il comporte
- un module de chauffage (20) d'un fluide de nettoyage, configuré pour porter un fluide de nettoyage à au moins une température prédéfinie,
- un capteur de température extérieure (24) et/ou un capteur de vitesse du véhicule (26),
une unité de traitement (28) configurée pour déterminer un niveau de salissure de la surface optique,
l'unité de contrôle (18) étant configurée pour générer lesdites instructions de pilotage en fonction de données reçues en provenance du capteur de température extérieure (24) et/ou du capteur de vitesse du véhicule (26) et/ou de l'unité de traitement (28).

## Patentansprüche

1. Verfahren zum automatischen Reinigen einer optischen Oberfläche eines Kraftfahrzeugs, das mindestens einen Zyklus (38) zum Reinigen der optischen Oberfläche umfasst, der eine Vielzahl von getrennten und aufeinanderfolgenden Schritten des Aufsprühens von Fluid umfasst, wobei der Reinigungszyklus (38) mindestens einen ersten Schritt des Aufsprühens (30) von Reinigungsfluid auf die optische Oberfläche, einen zweiten Schritt des Aufsprühens (32) von Reinigungsfluid auf die optische Oberfläche und einen Unterbrechungsschritt (34) mit einer Dauer ungleich Null zwischen dem ersten Schritt des Aufsprühens (30) von Reinigungsflüssigkeit und dem zweiten Schritt des Aufsprühens (32) von Reinigungsflüssigkeit umfasst, **dadurch gekennzeichnet, dass** das Reinigungsverfahren einen Schritt zum Erfassen eines Verschmutzungsgrads der optischen Oberfläche umfasst, wobei die Dauer des ersten Schritts des Aufsprühens, des Unterbrechungsschritts und des zweiten Schritts des Aufsprühens in Abhängigkeit von dem erfassten Verschmutzungsgrad abhängt.

2. Verfahren nach dem vorhergehenden Anspruch, bei dem die Dauer des Pausenschritts (34) mindestens zwei Sekunden beträgt.

3. Verfahren nach einem der vorhergehenden Ansprüche, bei dem die Dauer des Pausenschritts (34) größer ist als die Dauer des ersten Schritts des Versprühens (30) von Reinigungsflüssigkeit.

4. Verfahren nach einem der vorhergehenden Ansprüche, bei dem die Dauer des ersten Schritts des Versprühens (30) von Reinigungsflüssigkeit kleiner oder gleich der Dauer des zweiten Schritts des Versprühens (32) von Reinigungsflüssigkeit ist.

5. Verfahren nach dem vorhergehenden Anspruch, bei dem ein Druck der im ersten Sprühschritt (30) versprühten Reinigungsflüssigkeit kleiner oder gleich 3 bar ist.

6. Verfahren nach einem der vorhergehenden Ansprüche, bei dem zumindest vor dem Beginn des Reinigungszyklus (38) ein Schritt des Erwärmens von Flüssigkeit (40) durchgeführt wird.

7. Verfahren nach dem vorhergehenden Anspruch, bei dem der Schritt des Erwärmens (40) so durchgeführt wird, dass die Temperatur des im ersten Sprühschritt versprühten Fluids größer oder gleich der Temperatur des im zweiten Sprühschritt versprühten Fluids ist.

8. Verfahren nach einem der vorhergehenden Ansprüche, umfassend einen Schritt der Analyse des Reinigungsbedarfs (22) der optischen Oberfläche, umfassend mindestens einen Schritt der Erfassung einer Bewegungsgeschwindigkeit des Fahrzeugs und/oder einen Schritt der Erfassung einer Außentemperatur und/oder einen Schritt der Erfassung eines Verschmutzungsgrads der optischen Oberfläche.

9. Reinigungssystem (6) für eine Oberfläche eines Sensors eines Kraftfahrzeugs, das mindestens Folgendes umfasst:
- eine Vorrichtung zum Versprühen (8) eines Reinigungsfluids, die so konfiguriert ist, dass sie in von Null verschiedenen Zeitintervallen verschiedene Schritte zum Versprühen des Reinigungsfluids ausführt,
- eine Steuereinheit (18), die ausgebildet ist, um Befehle zur Steuerung der Sprühvorrichtung zu erzeugen und um mindestens einen Schritt des Reinigungsverfahrens nach einem der vorhergehenden Ansprüche zu steuern.

10. Das Reinigungssystem (6) nach dem vorhergehenden Anspruch, **dadurch gekennzeichnet, dass** es umfasst
- ein Heizmodul (20) zum Erwärmen einer Reinigungsflüssigkeit, wobei das Modul so konfiguriert ist, dass es eine Reinigungsflüssigkeit auf mindestens eine vordefinierte Temperatur bringt,
- einem Außentemperatursensor (24) und/oder einem Fahrzeuggeschwindigkeitssensor (26),
- eine Verarbeitungseinheit (28), die so konfiguriert ist, dass sie einen Verschmutzungsgrad der optischen Oberfläche bestimmt, wobei die Steuereinheit (18) so konfiguriert ist, dass sie die Steueranweisungen in Abhängigkeit von empfangenen Daten erzeugt, die von dem Außentemperatursensor (24) und/oder von dem Fahrzeuggeschwindigkeitssensor (26) und/oder von der Verarbeitungseinheit (28) kommen.

## Claims

1. Automated cleaning method for an optical surface of a motor vehicle, comprising at least one cleaning cycle (38) for the optical surface comprising several distinct and successive fluid spraying steps, said cleaning cycle (38) comprising at least a first step of spraying (30) cleaning fluid onto the optical surface, a second step of spraying (32) cleaning fluid onto the optical surface, and a pause step (34), of non-zero duration, between the first step of spraying (30) and the second step of spraying (32) cleaning fluid, , a method in which a pressure of the cleaning fluid sprayed onto the optical surface in the a first step of spraying (30) is less than or equal to a second pressure of the cleaning fluid sprayed onto the optical surface in the second step of spraying (32), **characterized in that** the cleaning method comprises a step of detecting a level of soiling of the optical surface, the duration of the first step of spraying (30), of the pause step (34) and the second step of spraying (32) varying as a function of the detected level of soiling.

2. The method as claimed in the preceding claim, in which a duration of the pause step (34) is at least equal to two seconds.

3. The method as claimed in one of the preceding claims, in which a duration of the pause step (34) is greater than a duration of the first step of spraying (30) cleaning fluid.

4. The method as claimed in one of the preceding claims, in which a duration of the first step of spraying (30) cleaning fluid is less than or equal to a duration of the second step of spraying (32) cleaning fluid .

5. The method as claimed in the preceding claim, in which a pressure of the cleaning fluid sprayed in the first step of spraying (30) is less than or equal to 3 bar.

6. The method as claimed in one of the preceding claims, in which a step of heating fluid (40) is carried out at least prior to the initiation of the cycle of cleaning (38).

7. The method as claimed in the preceding claim, in which the step of heating (40) is carried out such that the temperature of the fluid sprayed in the first step of spraying is greater than or equal to the temperature of the fluid sprayed in the second step of spraying.

8. The method as claimed in one of the preceding claims, comprising a step of analyzing the need for cleaning (22) of the optical surface, comprising at least a step of detecting a speed of movement of the vehicle and/or a step of detecting an outside temperature and/or a step of detecting a level of soiling of the optical surface.

9. A cleaning system (6) for a surface of a sensor of a motor vehicle, comprising at least:
- a device for spraying (8) a cleaning fluid, which device is configured to carry out, at non-zero time intervals, different steps of spraying the cleaning fluid,
- a control unit (18) which is configured to generate instructions for controlling the spraying device and to control at least one step of the cleaning method according to one of the preceding claims.

10. The cleaning system (6) as claimed in the preceding claim, **characterized in that** it comprises
- a heating module (20) for heating a cleaning fluid, which module is configured to bring a cleaning fluid to at least a predefined temperature,
- an outside temperature sensor (24) and/or a vehicle speed sensor (26),
- a processing unit (28) configured to determine a level of soiling of the optical surface, the control unit (18) being configured to generate said control instructions as a function of received data coming from the outside temperature sensor (24) and/or from the vehicle speed sensor (26) and/or from the processing unit (28).
